# EUROPEAN PATENT APPLICATION

(11) **EP 4 365 427 A1**
(43) Date of publication of application: **08.05.2024**
(21) Application number: 23207981.4
(22) Date of filing: 06.11.2023
(51) Int. Cl.: F02C 6/00, B64D 27/02

(54) **COMPOUNDED TURBO POWER UNIT WITH BOOST COMBUSTOR**

(30) Priority: 04.11.2022 US 202217980957
(71) Applicant: RTX Corporation, Farmington, CT 06032 (US)
(72) Inventor: BURD, Steven W., Cheshire, 06410 (US); STAUBACH, Joseph B., Colchester, 06415 (US); LEI MA, David, Avon, 06001 (US)
(74) Representative: Dehns

(57) **Abstract**

An aircraft power system includes an internal combustion core engine (22) where an inlet airflow (26) is mixed with a fuel and ignited to generate shaft power and a primary gas flow (34), a boost combustor (36) where a portion of the primary gas flow (34) from the core engine (22) is combined with fuel and ignited to generate a boosted gas flow (38), and a drive turbine (40) that includes a drive output shaft (42) wherein the boosted gas flow (38) is expanded to generate shaft power.

## Description

### TECHNICAL FIELD

The present disclosure relates generally to a non-turbine based aircraft power system that includes a boost combustor for generating additional power from core engine exhaust gases.

### BACKGROUND

Reduction and/or elimination of carbon emissions generated by aircraft operation is a goal of aircraft manufacturers and airline operators. Core engines generate hot exhaust gases that are generally expelled to the atmosphere. The heat energy in the exhaust gases may be expanded through a turbine for some energy recovery. However, even with the use of alternate fuels, a large amount of energy in the form of heat is simply exhausted to atmosphere. The lost heat reduces the overall efficiency of the engine.

Aircraft engine manufacturers continue to seek further improvements to engine performance including improvements to reduce environmental impact while improving thermal and propulsive efficiencies.

### SUMMARY

An aircraft power system according to an aspect of the present invention, includes, among other possible things, an internal combustion core engine where an inlet airflow is mixed with a fuel and ignited to generate shaft power and a primary gas flow, a boost combustor where a portion of the primary gas flow from the core engine is combined with fuel and ignited to generate a boosted gas flow, and a drive turbine that includes a drive output shaft wherein the boosted gas flow is expanded to generate shaft power.

In a further embodiment of the foregoing, the aircraft power system further includes an inlet compressor that is coupled to the drive turbine where the inlet airflow is compressed and communicated to the core engine.

In a further embodiment of any of the foregoing, the drive turbine receives the primary gas flow from the core engine and communicates a first exhaust flow to the boost combustor.

In a further embodiment of any of the foregoing, the aircraft power system includes a power turbine where the boosted gas flow from the boost combustor is received and expanded to generate shaft power.

In a further embodiment of any of the foregoing, the aircraft power system includes a gearbox that is driven by at least one of the core engine, the drive turbine and/or the power turbine.

In a further embodiment of any of the foregoing, the aircraft power system includes an engine output shaft that is driven by the core engine and a drive shaft that is driven by the drive turbine. Both the engine output shaft and the drive shaft are coupled to drive the gearbox.

In a further embodiment of any of the foregoing, the aircraft power system includes a second output shaft that is driven by the power turbine.

In a further embodiment of any of the foregoing, the power turbine and the second output shaft are rotatable separate from the drive turbine and the core engine.

In a further embodiment of any of the foregoing, the drive shaft and the second output shaft are portions of a common shaft that are rotatable along a common axis of rotation.

In a further embodiment of any of the foregoing, the aircraft power system includes a clutch assembly that selectively couples the power turbine to the common shaft.

In a further embodiment of any of the foregoing, the engine output shaft, the drive shaft and the second output shaft are all coupled to drive portions of the gearbox.

In a further embodiment of any of the foregoing, the engine output shaft and the drive shaft are portions of a common shaft that is disposed along a common axis of rotation.

In a further embodiment of any of the foregoing, the aircraft power system includes a first clutch assembly that selectively couples the core engine to the common axis.

In a further embodiment of any of the foregoing, the second output shaft is a portion of the common shaft and the power turbine is selectively coupled to the common shaft through a second clutch assembly.

In a further embodiment of any of the foregoing, the boost combustor receives the primary gas flow from the engine and communicates the boosted gas flow to the drive turbine.

In a further embodiment of any of the foregoing, the aircraft power system includes a power turbine where exhaust gas flow from the drive turbine is expanded to generate shaft power.

An aircraft power system according to another aspect of the present invention, includes, among other possible things, an internal combustion core engine where an inlet airflow is mixed with a fuel and ignited to drive a primary output shaft and a primary gas flow, an inlet compressor where the inlet airflow is compressed and communicated to the core engine, a boost combustor where the primary gas flow is mixed with fuel and ignited to generate a boosted gas flow, and a power turbine where the boosted gas flow from the boost combustor is expanded to drive a secondary output shaft.

In a further embodiment of any of the foregoing, the inlet compressor is driven by a drive turbine. The drive turbine is configured to receive one of the primary gas flow and the boosted gas flow to drive the inlet compressor.

In a further embodiment of any of the foregoing, the power turbine is rotatable independent of the primary output shaft and the drive turbine.

A method of generating power for an aircraft power system according to another aspect of the present invention, includes, among other possible things, communicating compressed inlet air to an internal combustion core engine, generating a first drive output with the core engine through a primary output shaft, expanding a primary gas flow from the core engine through a drive turbine that is coupled to an inlet compressor to compress the inlet air, generating a boosted gas flow by igniting a mixture of fuel and a portion of the primary gas flow in a boost combustor, and driving a second output shaft by expanding the boosted gas flow through a power turbine.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft power system embodiment with a boost combustor for generating a boosted exhaust gas flow.
Figure 2 is a schematic view of another aircraft power system embodiment with a boost combustor disposed between first and second turbine sections.
Figure 3 is a schematic view of another aircraft power system embodiment with a power turbine for driving a separate output shaft.
Figure 4 is a schematic view of another aircraft power system embodiment with the core engine and turbine sections disposed along a common output shaft.
Figure 5 is a schematic view of another aircraft power system embodiment with a power turbine on a shaft separate from a common shaft.

### DETAILED DESCRIPTION

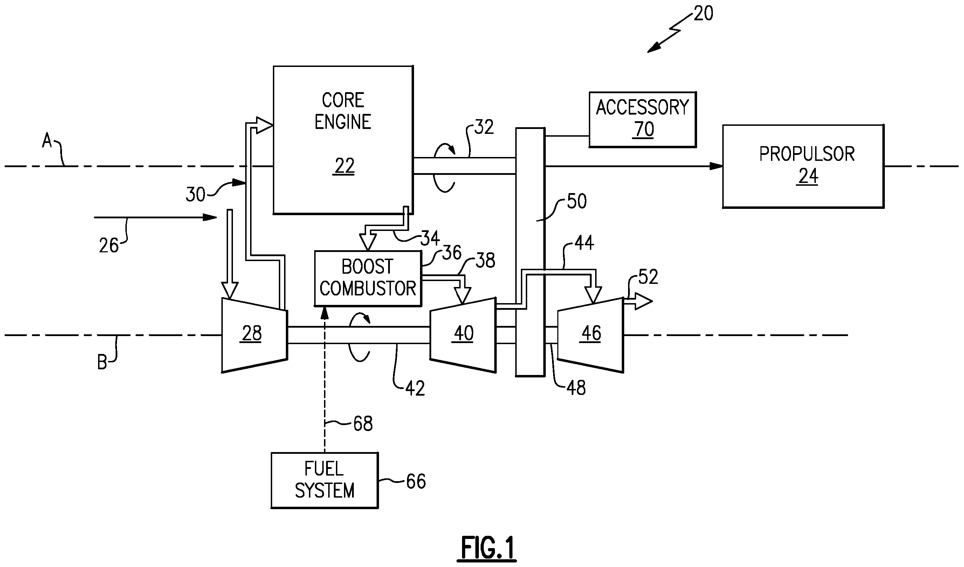

Figure 1 schematically illustrates an example aircraft power system 20 that includes an internal combustion core engine 22 to drive a propulsor 24 and/or an accessory device 70 and a boost combustor 36. The boost combustor 36 inputs additional power to an exhaust gas flow 34 from the core engine 22 to generate a boosted gas flow 38 that drives at least one turbine section. The boosted gas flow 38 is expanded through the turbine sections to contribute to the power generated by the core engine 22 and provides an overall increase in power production and captures waste thermal energy produced by the core engine 22.

The disclosed power system 20 may provide primary propulsive thrust for an aircraft. The power system 20 may also be utilized as an auxiliary power unit to generate electric power or drive accessories utilized for aircraft and engine operations. The disclosed power system 20 may also be utilized to supplement a primary power unit aboard an aircraft. The disclosed power system may also provide mechanical shaft power to supplement other electric and primary power generation systems.

The core engine 22 is an internal combustion engine. In one disclosed embodiment, the core engine 22 is an internal combustion engine that generates an exhaust gas flow 34. The internal combustion engine may include a reciprocating piston engine, a rotary piston or a Wankel engine.

The core engine 22 drives an engine output shaft 32 that may drive the propulsor 24 and/or an accessory 70. In one disclosed embodiment, the propulsor 24 is a propeller. The accessory 70 may be a generator, fuel pump, hydraulic pump or any other device utilized in the operation of the aircraft or power system 20. In one disclosed embodiment, the output shaft 32 is coupled to a gearbox 50. The propulsor 24 and the accessory 70 are driven through a portion of the gearbox 50. The gearbox 50 is shown schematically and may be a single gearbox assembly with several outputs or may be comprised of several separate gear drive assemblies driven by the engine output shaft 32.

A primary exhaust gas flow 34 from the core engine 22 is communicated to the boost combustor 36. A fuel system 66 supplies a fuel flow 68 to the boost combustor 36 that is mixed with the primary exhaust gas flow 34 and ignited to generate a boosted exhaust gas flow 38. The boosted exhaust gas flow 38 is expanded through at least one turbine section to drive other devices and/or produce additional shaft power utilized to drive the propulsor 24 and/or accessory 70.

An inlet compressor 28 is coupled through a drive shaft 42 to a drive turbine 40. The boosted flow 38 from the boost combustor 36 expands through the drive turbine 40 to drive the inlet compressor 28. The inlet compressor 28 pressurizes inlet air 26 and communicates the pressurized air 30 to the core engine 22. The increased pressure of the air 30 to the core engine 22 increases core engine efficiency.

Exhaust gas flow 44 from the drive turbine 40 is communicated to a power turbine 46. The exhaust gas flow 44 is further expanded through the power turbine 46 to drive a second output shaft 48. Exhaust flow 52 from the power turbine 46 is discharged into the ambient environment.

The second output shaft 48 may be utilized to drive aircraft or engine accessory devices 70. The accessory devices 70 may include an electric generator, a fuel pump and/or a hydraulic pump and any other shaft driven device utilized in the operation of an aircraft. The second output shaft 48 is coupled to the gearbox 50 to provide additional power to drive the propulsor 24 and accessory 70. The core engine output shaft 32, the second output shaft 48 and the drive output shaft 42 may all be coupled to the gearbox 50. The gearbox 50 may be configured to combine power from all of the shafts 32, 42 and 48 to drive the propulsor 24. The gearbox 50 may also be arranged to separately drive accessory components utilized for operation of the power system 20.

In a disclosed embodiment, the core engine 22 drives the output shaft 32 about an engine axis A. The inlet compressor 28, drive turbine 40 and the power turbine 46 are disposed and rotate about a second axis B. The engine axis A and the second axis B may be spaced apart at different locations within an aircraft structure. The engine axis A and the second axis B may also be disposed at an angle relative to each other. The relative orientation of the engine axis A and the second axis B may be tailored to a desired aircraft structure. The output shaft 32 may rotate at different speeds and direction than the drive output shaft 42 and the second output shaft 48.

The example power system embodiment 20 operates with the primary exhaust gas flow 34 being communicated first to the boost combustor 36. The primary exhaust gas flow 34 is mixed with fuel 68 and ignited to generate the boosted gas flow 38. The boosted gas flow 38 is first expanded through the drive turbine 40 to drive the inlet compressor 28. Gas flow 44 exhausted from the drive turbine 40 is further expanded through the power turbine 46 to drive the second output shaft 48.

The core engine output shaft 32 and the second output shaft 48 are both coupled to the gearbox 50 to combine power for driving the propulsor 24 and accessory 70. Although both the output shaft 32 and the second output shaft 48 are both coupled to a common gearbox 50, the shafts 32, 48 may be separately coupled to other devices requiring shaft power input.

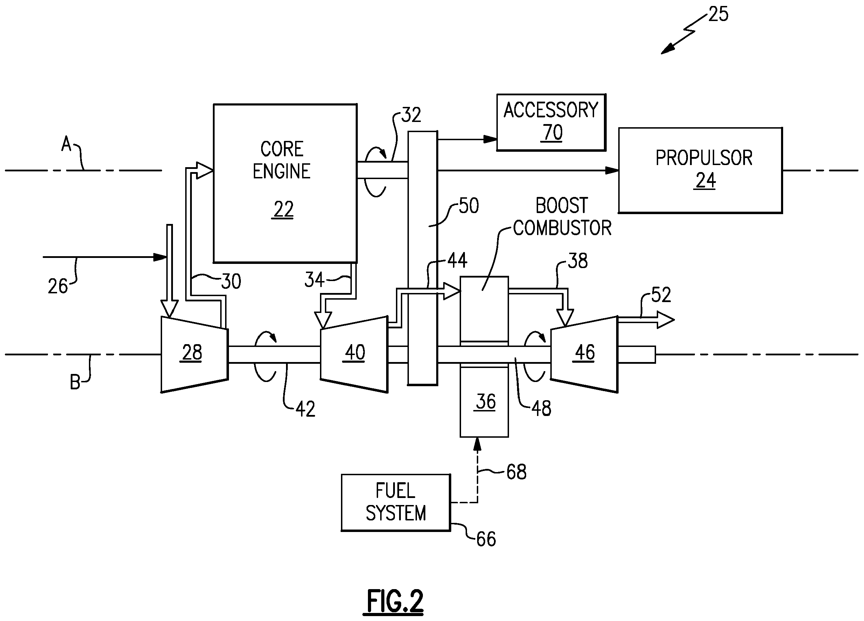

Referring to Figure 2, another example power system 25 is schematically shown and includes the boost combustor 36 disposed between turbine sections 40, 46. The power system 25 operates by communicating the primary gas flow 34 from the core engine 22 to the drive turbine 40. The energy from the primary gas flow 34 drives the drive turbine 40 and thereby, the inlet compressor 28 through the drive shaft 42. The primary gas flow 34 expands through the drive turbine 40 and is communicated as the exhaust gas flow 44 to the boost combustor 36. In the boost combustor 36, the exhaust gas flow 44 is mixed with fuel 68 and ignited to generate the boosted gas flow 38. The boosted gas flow 38 is expanded through the power turbine 46 to drive the second output shaft 48. The expanded gas flow 38 is then exhausted to atmosphere as exhaust gas flow 52.

Power generated by the power turbine 46 is combined with the power generated by the core engine 22 in the gearbox 50. The accessory 70 and the propulsor 24 are driven by through the gearbox 50. In one disclosed embodiment, the core engine output shaft 32, the second output shaft 48 and the drive shaft 42 are all coupled to drive a portion of the gearbox 50. However, each of the outputs of each shaft 32, 42 and 48 could be coupled to power other engine and/or aircraft devices. Moreover, the gearbox 50 may be configured to either combine the power output from each of the shafts 32, 42 and 48 or device the output power to drive different engine accessory devices and components.

Although power from the core engine 22, the drive turbine 40 and the power turbine 46 is illustrated by way of example as being combined in one gearbox 50, power may be directly applied to the propulsor 24 and the accessory 70 separately and/or through separately arranged gearboxes.

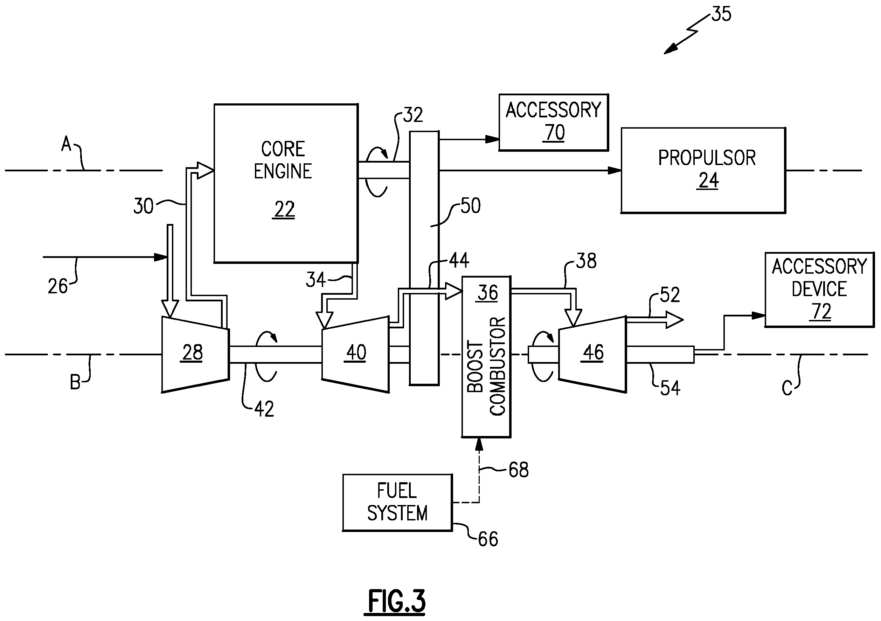

Referring to Figure 3, another example power system 35 is schematically shown where the power turbine 46 drives a separate second output shaft 54. The power turbine 46 and the second output shaft 54 are rotatable about a third axis C independent of the engine output shaft 32 and the drive shaft 42. The core engine output shaft 32 rotates about the axis A and the drive shaft rotates about the axis B. Moreover, the second output shaft 54 is not coupled to the gearbox 50. The independent operation of the second output shaft 54 provides for operation independent of the core engine 22 and the drive turbine 40. The independent operation of the second output shaft 54 may be for a generator or other accessory device 72 that operates independent of the core engine 22.

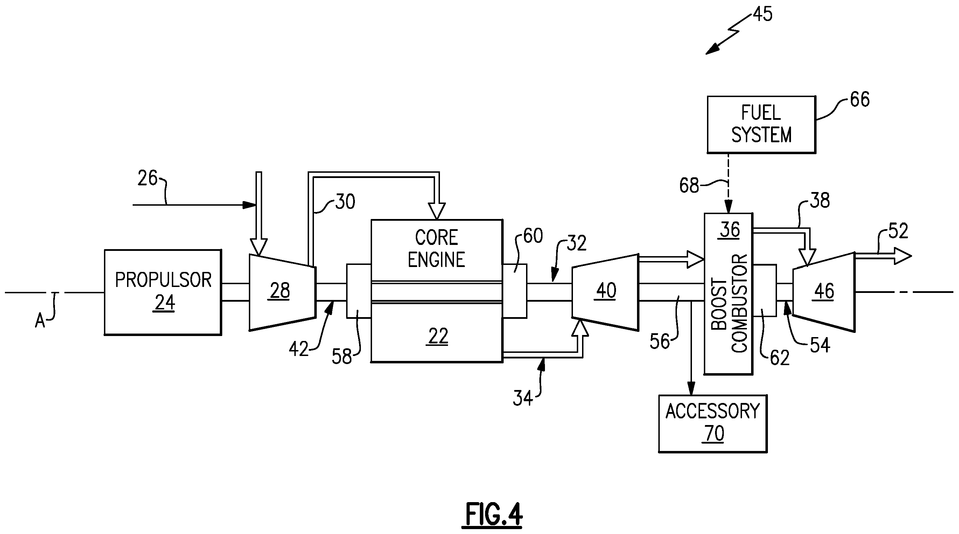

Referring to Figure 4, another example power system 45 is schematically shown and includes each of the turbine sections 40, 46 in line with the core engine 22. In this example, the drive shaft 42, the core engine output shaft 32 and the second output shaft 54 are all part of a common shaft assembly 56 that is rotatable about the common engine axis A.

In this example, the core engine 22 is selectively coupled to the common shaft 56 through at least one of a first clutch assembly 58 and a second clutch assembly 60. The portion of the common shaft 56 that couples the drive turbine 40 to the inlet compressor 28 is directed through the core engine 22, but does not change or alter operation of the core engine 22. The portion of the common shaft 56 that couples the drive turbine 40 to the inlet compressor 28 is independently rotatable relative to rotating output from the core engine 22.

Accordingly, in the example power system 45, the shaft output of the core engine 22 is coupled to the common shaft 56 by one, or both of the clutch assemblies 58, 60. The clutch assemblies 58, 60 maybe one-way clutch assemblies that prevent back driving of the core engine 22. The clutch assemblies 58, 60 may be of any configuration utilized to selectively input torque to the common shaft 56.

The power turbine 46 is selectively coupled to the common shaft 56 by a third clutch assembly 62. The third clutch assembly 62 may be automatically engage once the power turbine 46 attains a preselected speed. Moreover, the third clutch assembly 62 may be a one-way clutch assembly that automatically couples the power turbine to the shaft 56 at a preselected speed and direction. The clutch assembly 62 may be of any configuration utilized to selectively input torque to the common shaft 56.

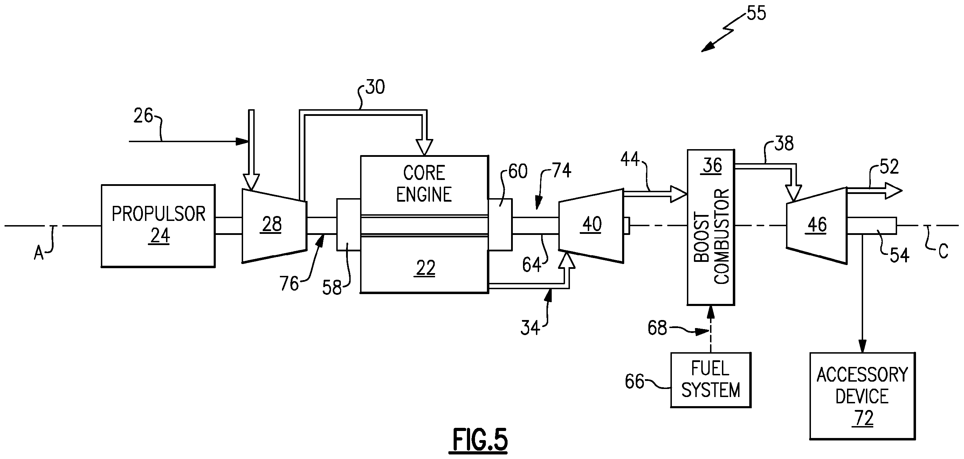

Referring to Figure 5, another example power system 55 is schematically shown and includes a common shaft 64 disposed along the engine axis A. The common shaft 64 includes a portion 74 that is selectively coupled to the core engine 22 and a portion 76 that drives the inlet compressor 28. The inlet compressor 28 and the drive turbine 40 are coupled to the common shaft 64. The core engine 22 is selectively coupled to the common shaft 64 by the first clutch assembly 58 and the second clutch assembly 60.

The power turbine 46 is coupled to a separate shaft 54 that is rotatable around a third axis C. The power turbine 46 is operable separate from and independent of the common shaft 64. Although the third axis C is shown in the disclosed example aligned with the engine axis A, the third axis C may be spaced apart vertically and horizontally from the engine axis A. Moreover, the power turbine 46 along the third axis C may be orientated at different angles relative to the engine axis A as may be desired for an aircraft structure.

In operation, inlet air 26 is compressed in the inlet compressor 28 and communicated to the core engine 22. The core engine 22 generates a rotatable output that is selectively coupled to the common shaft 64. Coupling of the core engine 22 to the common shaft 64 is provided by the clutch assemblies 58 and 60. As appreciated, both or only one clutch assembly may be utilized to couple power output from the core engine 22. The clutch assemblies 58, 60 may be one-way clutches that provide an automatic coupling to the common shaft 64 at a desired speed and/or direction of rotation. In this disclosed example, the common shaft 64 is coupled to drive the propulsor 24. Alternatively, the common shaft 64 may drive a generator or other device requiring a rotary power input.

Energy from exhaust gas flow 34 is recovered to power the drive turbine. Expansion of the exhaust gas flow 34 through the power turbine 46 drive the inlet compressor 28 through the shaft 64. Exhaust gas flow 44 from the drive turbine is communicated to the boost combustor 36. Fuel 68 is mixed with the exhaust gas flow 44 and ignited to generate the boosted gas flow 38. The energy of the boosted gas flow 38 is increased relative to the exhaust gas flow 44 and utilized to drive the power turbine 46. In this example, the power turbine 46 is operated independent of the core engine 22 and the common shaft 64 to drive an accessory device 72. The accessory device 72 may be a generator, pump or any other aircraft or engine accessory device requiring a rotary power input.

The example power system embodiments recover energy from a non-turbine core engine that would otherwise be lost as waste heat and further increase the additional power output with energy input from a downstream boost combustor.

Although an example embodiment has been disclosed, a worker of ordinary skill in this art would recognize that certain modifications would come within the scope of this disclosure. For that reason, the following claims should be studied to determine the scope and content of this disclosure.

## Claims

1. An aircraft power system (20;25;35;45;55) comprising:
an internal combustion core engine (22) where an inlet airflow (26) is mixed with a fuel and ignited to generate shaft power and a primary gas flow (34) ;
a boost combustor (36) where a portion of the primary gas flow (34) from the core engine (22) is combined with fuel and ignited to generate a boosted gas flow (38); and
a drive turbine (40) including a drive output shaft (42), wherein the system is configured such that the boosted gas flow (38) is expanded to generate shaft power.

2. The aircraft power system (20...55) as recited in claim 1, further comprising an inlet compressor (28) coupled to the drive turbine (40) where the inlet airflow (26) is compressed and communicated to the core engine (22).

3. The aircraft power system (25;35;45;55) as recited in claim 1 or 2, wherein the drive turbine (40) receives the primary gas flow (34) from the core engine (22) and communicates a first exhaust flow (44) to the boost combustor (36).

4. The aircraft power system (20) as recited in claim 1 or 2, wherein the boost combustor (36) receives the primary gas flow (34) from the engine (22) and communicates the boosted gas flow (38) to the drive turbine (40).

5. The aircraft power system (20) as recited in claim 4, including a power turbine (46) where exhaust gas flow (44) from the drive turbine (40) is expanded to generate shaft power.

6. The aircraft power system (20... 55) as recited in any of claims 1 to 4, including a power turbine (46) where the boosted gas flow (38) from the boost combustor (36) is received and expanded to generate shaft power.

7. The aircraft power system (20;25;35) as recited in claim 5 or 6 including a gearbox (50) driven by at least one of the core engine (22), the drive turbine (40) and/or the power turbine (46).

8. The aircraft power system (20;25;35) as recited in claim 7, including an engine output shaft (32) driven by the core engine (22), wherein the drive output shaft (42) is driven by the drive turbine (40) and both the engine output shaft (32) and the drive output shaft (42) are coupled to drive the gearbox (50).

9. The aircraft power system (20...55) as recited in any of claims 5 to 8, including a second output shaft (48;54) driven by the power turbine (46).

10. The aircraft power system (35;55) as recited in claim 9, wherein the power turbine (46) and the second output shaft (48;54) are rotatable separate from the drive turbine (40) and the core engine (22).

11. The aircraft power system (45) as recited in claim 9, wherein the drive output shaft (42) and the second output shaft (54) are portions of a common shaft (56;64) rotatable along a common axis of rotation,
optionally wherein the aircraft power system (45) includes a clutch assembly (62) selectively coupling the power turbine (46) to the common shaft (54).

12. The aircraft power system (20;25) as recited in claim 9, wherein the engine output shaft (32), the drive output shaft (42) and the second output shaft (48) are all coupled to drive portions of a or the gearbox (50).

13. The aircraft power system (45;55) as recited in claim 9, wherein the engine output shaft (32;74) and the drive output shaft (42;76) are portions of a common shaft (56;64) disposed along a common axis of rotation.

14. The aircraft power system (45;55) as recited in claim 13, including a first clutch assembly (58) selectively coupling the core engine (22) to the common shaft (56;64),
optionally wherein the second output shaft (54) is a portion of the common shaft (56) and the power turbine (46) is selectively coupled to the common shaft (56) through a second clutch assembly (62).

15. A method of generating power for an aircraft power system (20...55) comprising:
communicating compressed inlet air (26) to an internal combustion core engine (22);
generating a first drive output with the core engine (22) through a primary output shaft (32);
expanding a primary gas flow (34) from the core engine (22) through a drive turbine (40) coupled to an inlet compressor (28) to compress the inlet air (26);
generating a boosted gas flow (38) by igniting a mixture of fuel and a portion of the primary gas flow (34) in a boost combustor (36); and
driving a second output shaft (48;54) by expanding the boosted gas flow (38) through a power turbine (46).
